# EUROPEAN PATENT APPLICATION

(11) **EP 4 106 326 A1**
(43) Date of publication of application: **21.12.2022**
(21) Application number: 22179301.1
(22) Date of filing: 15.06.2022
(51) Int. Cl.: H04N 7/14

(54) **MULTI-CAMERA AUTOMATIC FRAMING**

(30) Priority: 15.06.2021 US 202163202527 P; 09.06.2022 US 202217806216
(71) Applicant: Plantronics, Inc., Santa Cruz, California 95060 (US)
(72) Inventor: SCHAEFER, Stephen Paul, Santa Cruz, 95060 (US); CHILDRESS JR, Rommel Gabriel, Santa Cruz, 95060 (US)
(74) Representative: Optimus Patents Limited

(57) **Abstract**

A videoconferencing system includes different cameras with different fields-of-view (FOVs). Frames of images acquired by these cameras may be processed to determine states, such as number of users present, talking, and so forth. Based on these states, frames from one camera may be selected to send to a far site. If the two states indicate no change in camera source from a first time to a second time, the current frame from the first camera that is sent to the far site is followed by another frame from the same camera. If the two states indicate a change in camera source from the first time to the second time, the current frame from the first camera that is sent to the far site is followed by a frame from the different camera. Depending on the two states and the cameras used, different transition effects may be applied to improve presentation.

## Description

### PRIORITY

This application claims priority to, U.S. Provisional Patent Application No. 63/202,527, filed on June 15, 2021, entitled "Telephoto and Wide-Angle Automatic Framing", which is hereby incorporated by reference in its entirety.

### BACKGROUND

In a videoconference, framing refers to the view or frame provided to the far end or site. Originally, framing was performed manually, first locally and then remotely. The pan, tilt, and zoom (PTZ) of the camera was manually controlled to provide a desired picture. Generally, the camera was set to show all participants present in the meeting room and not moved as people entered or left or different people spoke. An improvement over the manual system were systems that determined the talker and then automatically directed the camera to that talker. This would usually involve moving the camera, which was disorienting to viewers at the far end. In some cases, the last image before movement started was just displayed until movement was completed. In a further improvement, two cameras were used, one to frame all the participants or the whole room and one for talker focus. The transmitted image would change from the talker view to the room, or all participants view, when the talker changed so that a live view was always available, but camera motion was not shown.

While these improvements provided a better experience than manual framing, they were still limited to all participants or a single talker. In practice, there are many more situations than these two, such as multiple talkers, and those situations were not handled smoothly. When those situations were occurring, the viewers at the far end had a less pleasant experience, as either some of the talkers were not shown or there were an excessive number of framing changes.

### BRIEF DESCRIPTION OF FIGURES

The detailed description is set forth with reference to the accompanying figures. In the figures, the left-most digit(s) of a reference number identifies the figure in which the reference number first appears. The use of the same reference numbers in different figures indicates similar or identical items or features. The figures are not necessarily drawn to scale, and in some figures, the proportions or other aspects may be exaggerated to facilitate comprehension of particular aspects.
FIG. 1 is an illustration of a videoconferencing endpoint, according to some implementations.
FIG. 2 is an illustration of aspects of the videoconferencing endpoint of FIG. 1, according to some implementations.
FIG. 3 is a high-level flowchart of participant framing operations of a videoconferencing endpoint, according to some implementations.
FIG. 4 is an illustration of a conference room, the fields of view of the wide-angle and telephoto cameras, and a number of participants to illustrate framing, according to some implementations.
FIG. 5 is a state diagram of framing states and transitions, according to some implementations.
Fig. 5A is a flowchart to determine transitions between frames, according to some implementations.
Figs. 5B-5F are illustrations of transitions between frames, according to some implementations.
FIG. 6 is a state diagram illustrating transitions from the Empty Room state, according to some implementations.
FIG. 7 is a state diagram illustrating transitions from the Group Framing state, according to some implementations.
FIG. 8 is a state diagram illustrating transitions from the Any Talker state, according to some implementations.
FIG. 9 is a state diagram illustrating transitions from the Conversation state, according to some implementations.
FIG. 10 is a state diagram illustrating transitions from the Unambiguous Talker state, according to some implementations.
Fig. 10A is a flowchart illustrating development of split screen framing, according to some implementations.
FIG. 11 is a view of a conference room, with rule of thirds grids for each camera, according to some implementations.
FIG. 12 is a view of the conference room of FIG. 11 with four participants framed in Group Framing mode with the resulting rule of thirds grid, according to some implementations.
FIG. 13 is a view of the conference room of FIG. 11 and participants of FIG. 12 with a single talker in Any Talker mode with the resulting rule of thirds grid, according to some implementations.
FIG. 14 is a view of the conference room of FIG. 11 and participants of FIG. 12 with two talkers in Conversation mode with the resulting rule of thirds grid, according to some implementations.
FIG. 15 is a view of the conference room of FIG. 11 and participants of FIG. 12 with three talkers in Conversation mode with the resulting rule of thirds grid, according to some implementations.
FIG. 16 is a view of the conference room of FIG. 11 and participants of FIG. 12 with one talker in Unambiguous Talker mode with the resulting rule of thirds grid, according to some implementations.
FIG. 17 is a view of the conference room of FIG. 11 and participants of FIG. 12 with two talkers in split screen mode with two rule of thirds grids, according to some implementations.
FIG. 18 is a view of the conference room of FIG. 11 and participants of FIG. 12 which has changed from the two talkers of FIG. 17 to three talkers and the resulting single rule of thirds grid, according to some implementations.

While implementations are described herein by way of example, those skilled in the art will recognize that the implementations are not limited to the examples or figures described. It should be understood that the figures and detailed description thereto are not intended to limit implementations to the particular form disclosed but, on the contrary, the intention is to cover all modifications, equivalents, and alternatives falling within the spirit and scope as defined by the appended claims. The headings used herein are for organizational purposes only and are not meant to be used to limit the scope of the description or the claims. As used throughout this application, the word "may" is used in a permissive sense (i.e., meaning having the potential to), rather than the mandatory sense (i.e., meaning must). Similarly, the words "include", "including", and "includes" mean "including, but not limited to".

### DETAILED DESCRIPTION

A videoconferencing system may include multiple cameras with different fields-of-view (FOVs) of a conference room. These cameras may be operated to frame the conference room, a person in the conference room, multiple persons in the conference room, and so forth, depending on the FOV of each camera and default settings. For example, frames of images from a first camera with a first FOV may be sent to a far site to zoom on a single person that is talking while frames of images from a second camera with a wider FOV may be sent to the far site to frame multiple persons talking or to frame all persons in the conference room. When frames from different cameras are used, the resulting transition from one frame to the next frame may not be handled very smoothly, which results in an unpleasant viewing experience. By analyzing frames to determine a region of interest and determining if a change in camera source is involved, a system may apply one or more transition effects that may help improve the presentation of frames.

Frames, such as still images captured by a video stream, are acquired by cameras in a videoconferencing system. These frames are processed and analyzed by one or more computer vision systems to extract numerical or symbolic information. In some embodiments, these computer vision systems include neural networks that help identify persons in a conference room and their corresponding location. In particular, when frames are inputted to a neural network, the output of the neural network may provide information of features of persons detected in the frames, such as faces, bodies, or heads of such persons. In one example, bounding boxes may be outputted by the neural network to identify the faces of persons in the conference room.

In a similar manner, audio acquired from the microphones in a videoconference system may also be analyzed to determine the source location of sound detected by the microphones. In some embodiments, these sounds may correspond to voices of persons talking during a videoconference. An audio system may process this audio data to determine a horizontal or vertical position of a source location of the sound that is detected.

By combining the feature data and the sound source data, a state may be determined for frames of images acquired by the cameras of a videoconferencing system. For example, the combination of bounding boxes and the horizontal or vertical position of a sound due to a voice talking may help determine that one person of a group of persons in a conference room is talking at a particular time. Overtime, such a state may change if other persons are talking, if the current talker stops talking, and so forth.

The state of the frames associated with a videoconference may help identify the type of framing, and corresponding regions of interests, that are desired. For example, a state of one person talking may correspond to framing the current talker, while a different state involving multiple persons talking may correspond to group framing. A state and desired type of framing may help identify a particular camera of the multiple cameras in a videoconferencing system that are desirable to present frames associated with the current state. Given that each camera has a corresponding FOV, the state and desired framing may be used to determine the camera with the best FOV to implement the desired framing.

In some embodiments, a first camera may be used with a FOV that is centered in the conference room, but does not span the entire conference room. For example, the first camera may have a focused center that includes a table and a few persons typically sitting at the table and participating in a videoconference. In some scenarios, this first camera may serve as the default camera and may be of high-resolution. A second camera, such as a wide-angle camera, may also be used in a conference room with a FOV that captures the entire conference room (and thus the entire FOV of the first camera). This wide-angle camera may be used for scenarios where the focus is all of the persons in the room, several persons talking that are far apart, and so forth. In some scenarios, this wide-angle camera is not considered the default camera to use and thus may be of lower resolution than the first camera. In other embodiments, there may be three or more cameras, each with different FOVs of the conference room. Some of these cameras may be part of the same structure or individually positioned within the conference room.

When switching from one state to another state, frames with corresponding regions of interest to be sent to the far site may be acquired from the same camera. In other scenarios, one frame with a first region of interest to be sent to the far site may be acquired by a first camera, while the next frame with a second region of interest may be acquired from a second camera. The transitions between these frames and regions of interest (which are due to changed states during the videoconference) may be unpleasant, particularly when a change in a camera source is involved.

To prevent these unpleasant experiences and to make framing decisions more automatic, an analysis is performed to determine if the different frames involved, and thus the different regions of interest to be used, require a change in a camera source. If no change in camera source is involved, a first frame having a first region of interest may be replaced with the second frame having a second region of interest using an ease transition, as both frames are acquired by the same camera. By contrast, if a change in camera source is involved, a dissolve transition is used instead. The dissolve transition may phase out the presentation of a first frame having the first region of interest, while phasing in the presentation of a second frame having the second region of interest. In some scenarios, this may involve phasing from the presentation of the first frame having the first region of interest, to a white or blank screen or frame, and then from the white or blank screen or frame to the second frame having the second region of interest. These two transition effects, which are dependent upon the change in states, help improve the experience for the viewer. In addition, the framing decisions become more automatic while providing a pleasant experience for the far site.

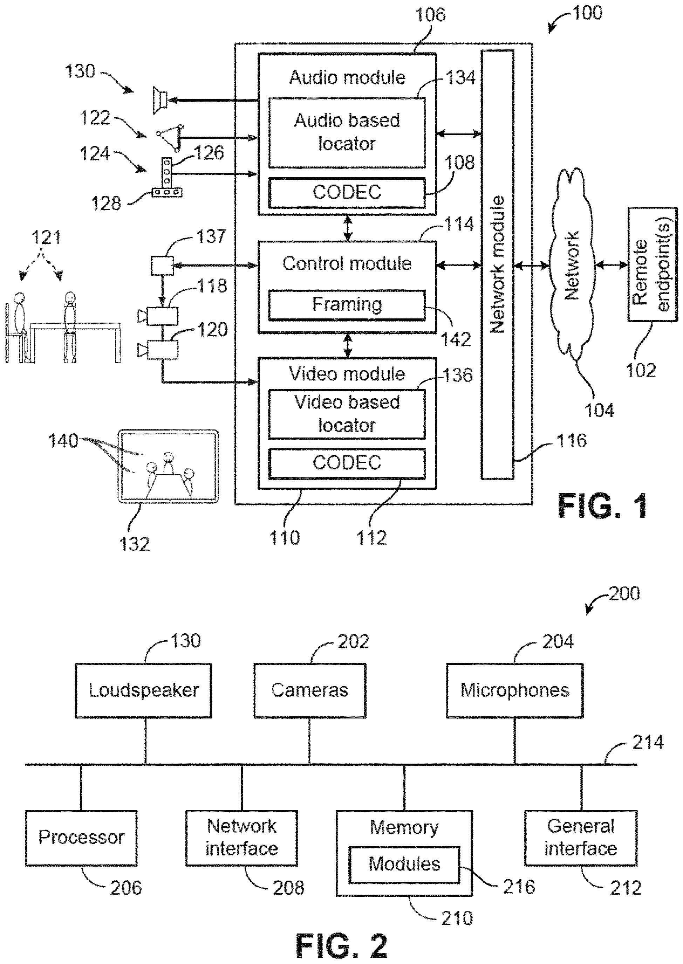

FIG. 1 illustrates a videoconferencing endpoint 100, according to some embodiments. The videoconferencing apparatus or endpoint 100 communicates with one or more remote endpoints 102 over a network 104. Components of the endpoint 100 include an audio module 106 with an audio codec 108 and has a video module 110 with a video codec 112. Modules 106 and 110 operatively couple to a control module 114 and a network module 116.

During a videoconference, one or more cameras (e.g., camera 118 and camera 120) capture video and provide the captured video to the video module 110 and codec 112 for processing. Some embodiments may include two cameras, while other embodiments include three or more cameras. In one example, one camera (e.g., 118) is a smart camera and one camera (e.g., 120) is not a smart camera. In some examples, two or more cameras (e.g., camera 118 and camera 120) are cascaded such that one camera controls some or all operations of the other camera. In some examples, two or more cameras (e.g., camera 118 and camera 120) are cascaded such that data captured by one camera is used (e.g., by the control module 114) to control some or all operations of the other camera.

In another example, a setup for a conference room may include three or more cameras with different FOVs or partially overlapping FOVs that are positioned within the conference room. These cameras may be included individually or in sets near or around a display screen, on a table, within various corners of the room, and so forth. A location and FOV provided by each camera may be evaluated to determine the camera that could provide the most appropriate face forward view of participants and talkers during a videoconference. In a scenario where a videoconference participant is moving, a first camera with a first FOV may be most appropriate to provide a view of the face of the participant at a first time, while a second camera with a second FOV may be most appropriate to provide a view of the face of the participant at a second time, after the participant has moved.

In yet another example, the endpoint 100 may include only a single camera, such as camera 118, and that camera is a wide angle electronic-pan-tilt-zoom camera. In some examples, when a view subject is zoomed in upon, a sub-portion of the captured image containing the subject is rendered, whereas other portions of the image are not. Additionally, one or more microphones 122 capture audio and provide the audio to the audio module 106 and codec 108 for processing. These microphones 122 can be table or ceiling microphones, or they can be part of a microphone pod or the like. In one or more examples, the microphones 122 are tightly coupled with one or more cameras (e.g., camera 118 and camera 120). The endpoint 100 uses the audio captured with these microphones 122 primarily for the conference audio.

As shown in FIG. 1, an endpoint 100 also includes a microphone array 124, in which a subarray 126 is orthogonally arranged with a subarray 128. In some examples, the microphone array 124 also captures audio and provides the audio to the audio module 106 for processing. In some examples, the microphone array 124 includes both vertically and horizontally arranged microphones for determining locations of audio sources, e.g., people who are talking. In some examples, the microphone array 124 includes only horizontally arranged microphones. In some examples, the endpoint 100 uses audio from the microphone array 124 primarily for camera tracking purposes and not for conference audio. In some examples, the endpoint 100 uses audio from the microphone array 124 for both camera tracking and conference audio.

After capturing audio and video, the endpoint 100 encodes the audio and video in accordance with an encoding standard, such as MPEG-4, H.263, H.264 and H.265. Then, the network module 116 outputs the encoded audio and video streams to the remote endpoints 102 via the network 104 using an appropriate protocol. Similarly, the network module 116 receives conference audio and video through the network 104 from the remote endpoints 102 and transmits the received audio and video to their respective codecs 108/112 for processing. The endpoint 100 also includes a loudspeaker 130 which outputs conference audio, and a display 132 that outputs conference video.

In at least one example of this disclosure, the endpoint 100 uses the two or more cameras 118, 120 in an automated and coordinated manner to handle video and views of the videoconference environment dynamically. In some examples, the first camera (e.g. 118) is a fixed electronic pan-tilt-zoom (EPTZ) wide-angle camera, and the second camera 120 is a fixed EPTZ telephoto camera. In other examples, the first camera 118 or the second camera 120 may be manual or EPTZ cameras that are not fixed. In even further examples, the field of view of the telephoto camera 120 is approximately centered on the field of view of the wide-angle camera 118. This centered configuration allows higher resolution images for the central area of the conference room, where the endpoint 100 is generally directed and the participants usually sit. Using the wide-angle camera (e.g. 118), the endpoint 100 captures video of the room or at least a wide or zoomed-out view of the room that would typically include all the videoconference participants 121 as well as some of their surroundings.

According to some examples, the endpoint 100 uses the telephoto camera (e.g., 120) to capture video of one or more participants, including one or more current talkers, in a tight or zoomed-in view.

In some examples, the endpoint 100 alternates between tight views of a talker and wide views of a room. In some examples, the endpoint 100 alternates between two different tight views of the same or different talkers. In some examples, the endpoint 100 will capture a first view of a person with one camera and a second view of the same person with another camera and determine which view is better for sharing with a remote endpoint 102.

In at least one example of this disclosure, the endpoint 100 outputs video from only one of the two cameras 118, 120 at any given time. As the videoconference proceeds, the output video from the endpoint 100 can switch from the view of one camera to another. In accordance with some examples, the endpoint 100 outputs a room-view when there is no participant talking and a people-view when one or more participants 121 are talking.

In one or more examples, the endpoint 100 uses an audio-based locator 134 and a video-based locator 136 to determine locations of participants 121 and frame views of the environment and participants 121. A framing module 142 in the control module 114 uses audio and/or video information from these locators 134, 136 to perform framing operations, such as cropping one or more captured views, such that one or more subsections of a captured view are displayed on a display 132 and/or transmitted to a far site or remote endpoint 102.

In some examples, transitions between the two views from the cameras 118, 120 can be faded and blended to avoid sharp cut-a-ways when switching between camera views. Other types of video transitions, such as dissolves, cuts, wipes, slides, pushes, splits, and the like, can be used to switch between camera views. The specific transitions that are used may be varied as well. In some examples, a switch from a first view to a second view for transmission to a remote endpoint 102 will not occur until an active participant 121 has been present in the second view for a minimum amount of time. In at least one example of this disclosure, the minimum amount of time is one second. In at least one example, the minimum amount of time is two seconds. In at least one example, the minimum amount of time is three seconds. In at least one example, the minimum amount of time is four seconds. In at least one example, the minimum amount of time is five seconds. In other examples, other minima (e.g., 0.5-7.0 seconds) are used, depending on such factors as the size of a conference room, the number of participants 121 at an endpoint 100, the cultural niceties of the participants 140 at the remote endpoint 102, and the sizes of one or more displays 132 displaying captured views.

In examples where only a single camera 118 is present and that camera is a wide angle, high definition EPTZ camera, the above discussed framing options of room or participant views and talker views are developed from the single camera. In such examples, transitions are preferably performed as described in U.S. Patent No. 10,778,941, which is hereby incorporated by reference. All of these decisions on particular views to be provided are made by the framing module 142.

FIG. 2 illustrates aspects of a videoconferencing endpoint 200 (e.g., 100), in accordance with an example of this disclosure. The endpoint 200 includes a loudspeaker 130, cameras 202 (e.g., 118, 120) and microphones 204 (e.g., 122, 124) interfaced via interfaces to a bus 214. The endpoint 200 also includes a processor 206, a network interface 208, a memory 210 and an input/output general interface 212, all coupled by the bus 214.

The processor 206 can include digital signal processors (DSPs), central processing units (CPUs), graphics processing units (GPUs), dedicated hardware elements, such as neural network accelerators and hardware codecs, and the like in any desired combination.

The memory 210 can be any conventional memory or combination of types of conventional memory, such as SDRAM and flash memory, and can store modules 216 in the form of software and firmware, or generic programs, for controlling the endpoint 200. In addition to software and firmware portions of the audio and video codecs 108, 112, the audio and video based locators 134, 136, framing module 142 and other modules discussed previously, the modules 216 can include operating systems, a graphical user interface (GUI) that enables users to control the endpoint 200 such as by selecting to mute the endpoint 200, and algorithms for processing audio/video signals and controlling the cameras 202. SDRAM can be used for storing video images of video streams and audio samples of audio streams and can be used for scratchpad operation of the processor 206. In at least one example of this disclosure, one or more of the cameras 202 can be a panoramic camera.

The network interface 208 enables communications between the endpoint 200 and remote endpoints (102). In one or more examples, the general interface 212 provides data transmission with local devices such as a keyboard, mouse, printer, overhead projector, display, external loudspeakers, additional cameras, and microphone pods, etc.

The cameras 202 and the microphones 204 capture video and audio, respectively, in the videoconference environment and produce video and audio streams or signals transmitted through the bus 214 to the processor 206. In at least one example of this disclosure, the processor 206 processes the video and audio using algorithms in the modules 216. For example, the endpoint 200 processes the audio captured by the microphones 204 as well as the video captured by the cameras 202 to determine the location of participants 121 and control and select from the views of the cameras 202. Processed audio and video streams may be sent to remote devices coupled to a network interface 208 and devices coupled to a general interface 212. This is just one example of the configuration of an endpoint 100 and other configurations are well known.

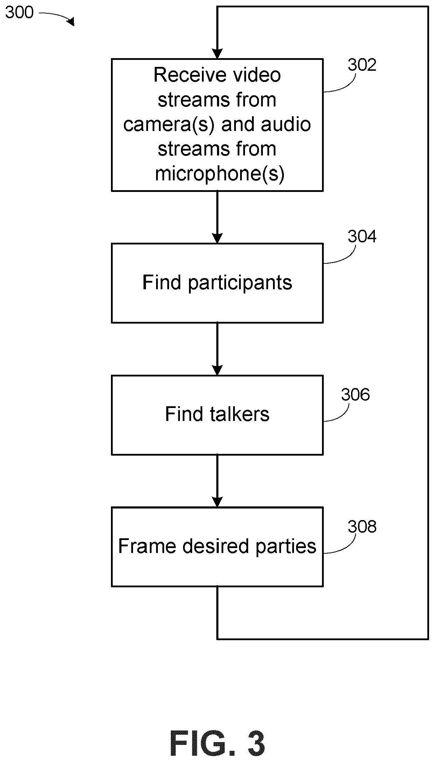

Referring now to Figure 3, a high-level flowchart 300 of participant framing is illustrated. In step 302, video streams are received from any cameras and audio streams are received from any microphones. In step 304, participants are located, generally using face or body finding in the video streams using the video-based locator 136. There are a number of sub-modules in the video-based locator 136, a common sub-module being a neural network sub-module that performs face and body finding operations to locate participants. Examples of finding participants are provided in more detail in U.S. Patents Nos. 8, 395,653; 8,842,161; and 10,574,899, and PCT applications WO 2020/103078 A1, and WO 2020/103068 A1, which are hereby incorporated by reference. In some embodiments, finding participants may yield bounding boxes that represent different features of a person. Some of these features may include faces of the persons, heads of the persons, or bodies of the persons.

In step 306, the audio streams are used in combination with the video streams to find talkers. Examples of talker localization include U.S. Patents Nos. 9,030,520; 9,542,603; 9,723,260; 10,091,412; and 10,122,972, which are hereby incorporated by reference. An audio-visual frame may refer to one or more blocks of data that include computer vision information and audio process information generated at, or corresponding to, a specific moment in time. A talker is a person that becomes a target or a subject of interest being tracked using an audio-visual map.

After the talkers are found in step 306, in step 308 the parties are framed as desired. Examples of framing decisions include U.S. Patent Nos. 9,800,835; 10,187,579; and 10,778,941, which are hereby incorporated by reference. Further improvements in framing decisions are discussed below.

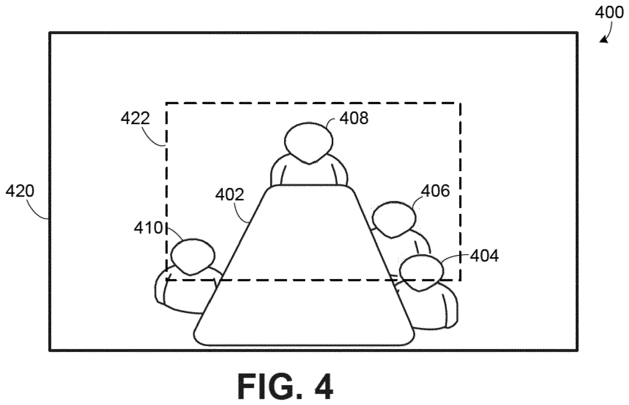

Figure 4 represents an exemplary image of a conference room 400 containing four participants. A conference table 402 is present, with participants 404, 406, 408, and 410 sitting around the conference table 402. The field of view of the wide-angle camera 118 is the border 420 of the image. A rectangle 422 illustrated using a dashed line defines the field of view of the telephoto camera 120. The border 420 and the rectangle 422 have a common center, conforming to the approximate location of the field of view of the telephoto camera 120 with respect to the field of view of the wide-angle camera 118. In other embodiments, the field of view of camera 120, shown as rectangle 422, can be different than that shown. For example, the field of view of camera 120 can be off center.

Of note, the conference room 400 may use more than two cameras. In that case, the FOV of each corresponding camera may be exclusive, partially overlapping, or fully overlapping with other FOVs of other cameras. For example, conference room 400 may include three cameras each with a 60 degree FOV that together cover a 150 degree FOV of the conference room. In yet another example, the various cameras may include a FOV for a front of the conference room, a back of the conference room, a side of the conference room, and so forth.

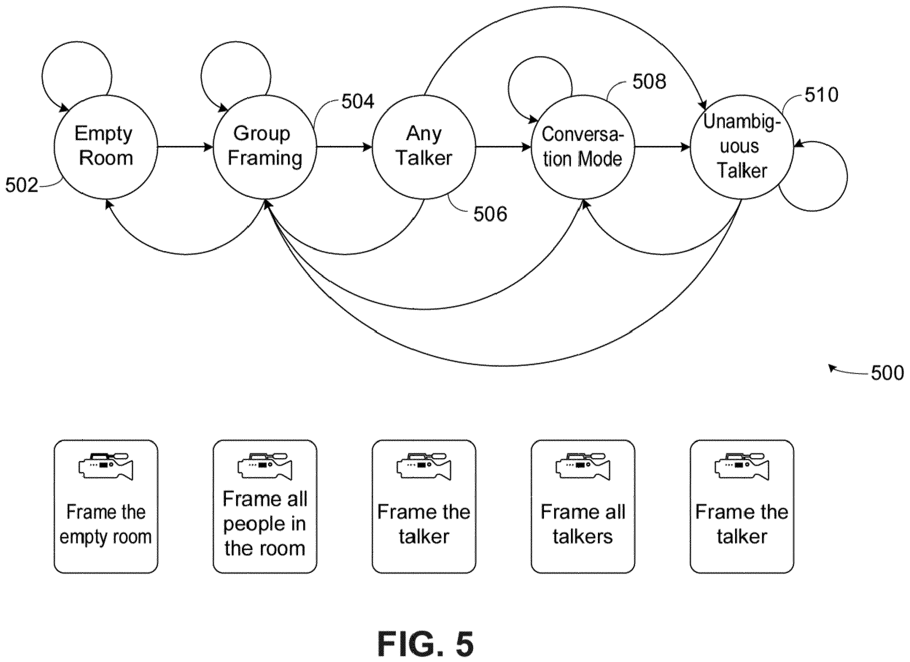

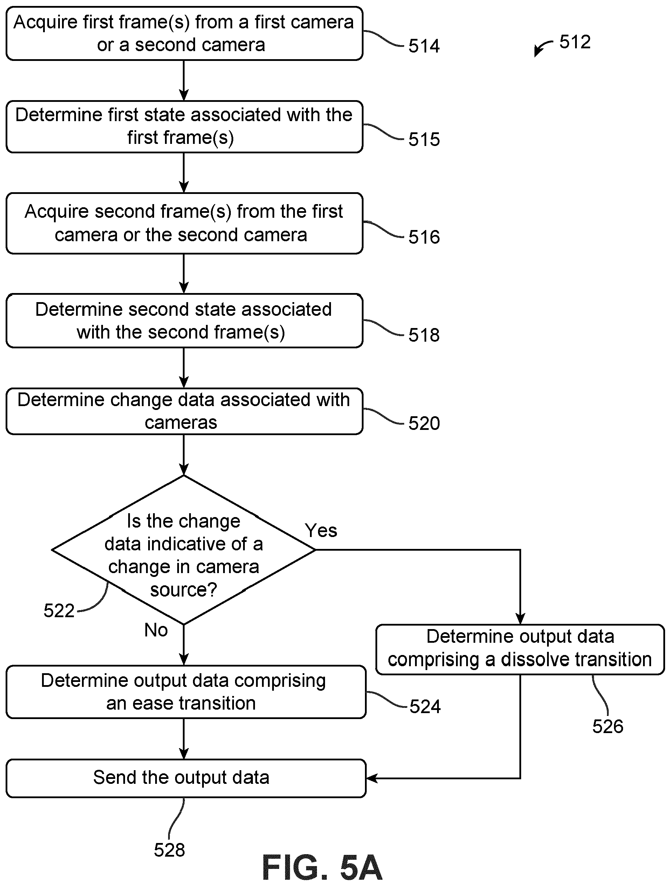

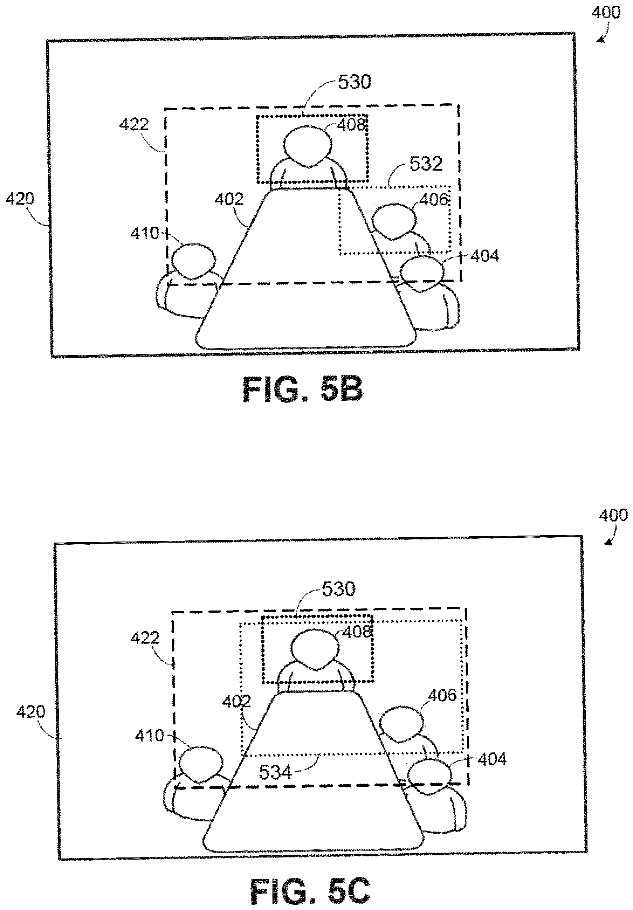

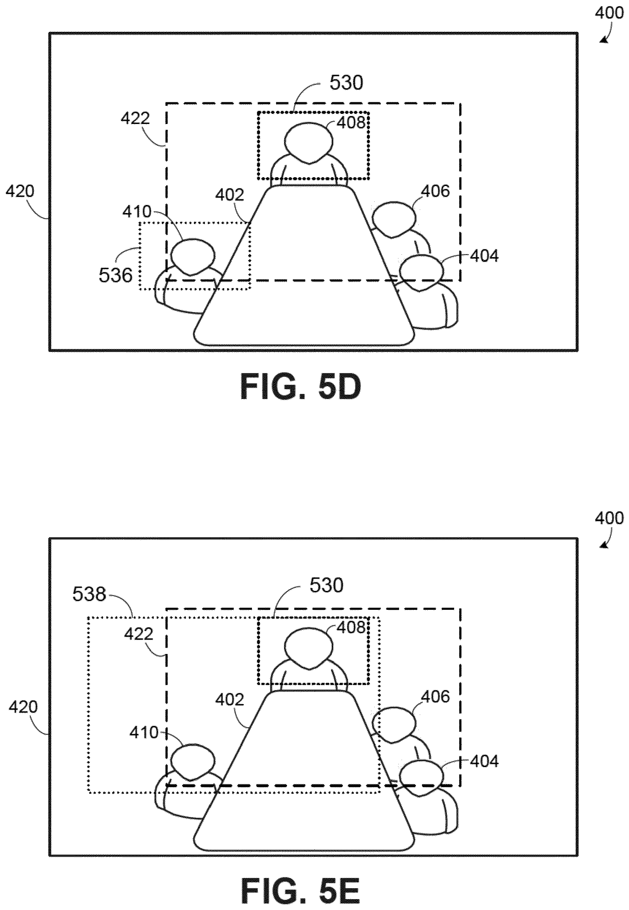

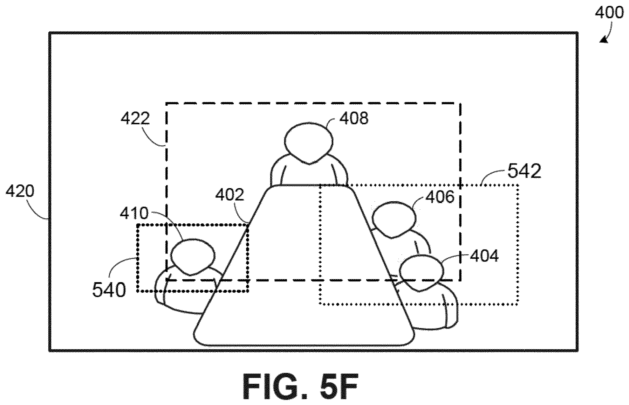

Figure 5 is an illustration of a state machine 500 for making framing decisions. The five states are empty room 502, group framing 504, any talker 506, conversation mode 508, and unambiguous talker 510. In empty room state 502, the camera view that is transmitted to the far site frames the empty conference room. In group framing state 504, the view that is transmitted frames all of the people or participants in the conference room. In any talker state 506, the view that is transmitted frames that talker. In conversation mode state 508, the view that is transmitted frames all talkers. In unambiguous talker state 510, the view that is transmitted frames the talker.

When in empty room state 502, a transition can occur to group framing state 504 or can remain in empty room state 502. In group framing state 504, transitions can occur to empty room state 502, any talker state 506, or remain in group framing state 504. In any talker state 506, transitions can occur to conversation mode state 508, group framing state 504 or unambiguous talker state 510. In conversation mode state 508, transitions can occur to unambiguous talker state 510, group framing state 504 or remain in conversation mode state 508. In unambiguous talker state 510, transitions can occur to conversation mode state 508, group framing state 504 or remain in unambiguous talker state 510.

Fig. 5A illustrates a process 512 for making transition decisions between frames or views sent to the far site. In step 514, a first frame or set of frames are acquired from a camera. These frames can be acquired from the first camera 118 or 120 or the second camera 120 or 118. A first region of interest or view may be identified from the first frame(s). In step 515, a first state associated with the first frame(s) is determined. For example, referencing FIG. 5, the first frame(s) may be associated with an empty room state 502, a group framing state 504, any talker state 506, a conversation mode state 508, or an unambiguous talker state 510.

At step 516, a second frame or set of frames can be acquired from the first camera 118 or 120 or the second camera 120 or 118. In one embodiment, the first frame(s) acquired at 514 and the second frame(s) acquired at 516 may both be acquired by the first camera 118 or 120. In another embodiment, the first frame(s) acquired at 514 and the second frame(s) acquired at 516 may both be acquired by the second camera 120 or 118. In yet another embodiment, the first frame(s) acquired at 514 may be acquired by the first camera 118 or 120, while the second frame(s) acquired at 516 may be acquired by the second camera 120 or 118, or vice versa. A second region of interest or view may also be identified from the second frame(s). At step 518, a second state associated with the second frame(s) is determined. This second state may be any of empty room state 502, a group framing state 504, any talker state 506, a conversation mode state 508, or an unambiguous talker state 510, as shown in Figure 5.

At step 520, a determination of change data associated with the cameras is made. This determination is based on a comparison of the first state determined at 515 and the second state determined at 518. Referring back to FIG. 5, the first state may be associated with a first region of interest and a first type of framing and the second state may be associated with a second region of interest and a second type of framing. For example, the first state may be a group framing state 504 that is associated with framing all the people in the conference room while the second state may be any talker state 506 that is associated with framing the talker. If a change in a camera source is needed to change from framing all the people (using a wide-angle camera that ranges the room) to framing the talker (using a telephoto camera focused on the center of the room), change data would be generated to indicate the first and second frames are acquired by different camera sources. By contrast, if the two sets of frames are acquired by the same camera source, the change data would indicate no change in camera source is needed. As an example, this might occur when there is a small group that is framed within the range of the telephoto camera and then someone from that small group starts talking and the focus changes to that talker. In another scenario, the wide-angle camera may be able to frame all talkers in a large group and then change to framing all the people in the room when there are no more talkers without a change in camera source.

At step 522, a decision is made whether the change data determined at 520 is indicative of a change in camera source. If the change data is not indicative of a change in camera source, the process continues to step 524. At step 524, output data comprising an ease transition is determined. The ease transition indicates the first frame is to be replaced with the second frame, as both frames are acquired by the same camera source. In one embodiment, the ease transition is performed by ending the first frame and beginning the next frame with no overlap or no gap between the frames. After the ease transition is performed, frames from the designated camera (which is selected as part of the change data), continues to send frames until the next state change. Upon detecting another state change, the transition process 512 is repeated to determine if a change in camera source is involved.

If at 522, a decision is made that the change data indicates a change in camera source, the process continues to step 526. At step 526, output data is determined which comprises a dissolve transition. A dissolve transition may comprise fading out the first frame to a white screen or a black screen and then fading in from the white or black screen to the next frame. This type of transition improves the overall viewing experience instead of performing an ease operation, given that the change in camera source would prevent the changes in frames from being smooth or pleasant. After the dissolve transition is performed, frames from the designated camera (which is selected as part of the change data) continues to send frames until the next state change. Upon detecting a state change, the transition process is repeated to determine if a change in camera source is involved.

After performing either of 524 or 526, the process continues to step 528. At 528, the output data determined at 524 or 526 is sent to the far site. The frames may then be presented at the far site using the designated type of transition. Doing so improves the transition effect that is applied between frames, based on the state changes detected and change of camera sources needed, if any. As a result, the user experience is substantially improved. In addition, by performing transition process 512, the transition process 512 becomes more automatic.

In some embodiments, the first camera (which could represent telephoto camera 120) may be designated as a preferred camera to use, given its higher resolution and focus on the center of the room where a conference table 402 and most participants may be located. Thus, if the desired framing or views associated with the two states may be accomplished using only the first camera 120 or only the second camera 118, the framing would be implemented using the first camera 120 and an ease transition, given the preference to use the first camera 120 whenever possible. However, if the desired framing or views associated with the first state and the second state involves a change in a camera source, then the transition would be a dissolve transition using frames from the two camera sources, as needed. By employing the dissolve transition during a camera change, the user experience between the two frames or views is greatly improved.

Of note, the transition process 512 may be repeated continuously during a videoconference. As frames continue to be acquired by the different cameras, state changes may be detected and the transition process 512 may be used to determine if and when changes in camera sources are involved and the type of transition to be applied for such frames or views. In even further embodiments, the transition process 512 may be expanded to include the acquisition of frames from three or more cameras (with differing FOVs covering the same conference room) and the analysis of such frames to determine state changes, change data, and types of transitions to be applied to such frames or views.

Operation of the flowchart of Fig. 5A is illustrated in Figs. 5B-5E. In Fig. 5B, a starting frame 530 and an ending frame 532 are shown. As both frames 530 and 532 are within the telephoto camera 120 field of view indicated by the rectangle 422, an ease is used to transition from the starting frame 530 to the ending frame 532. In Fig. 5C, the starting frame 530 is covering the participant 408. The ending frame 534 is covering participants 408 and 406 but is still in the telephoto camera 120 field of view. Therefore, an ease is performed from frame 530 to frame 534.

In Fig. 5D, the starting frame 530 is within the field of view of the telephoto camera 120, while an ending frame 536 extends past the field of view of the telephoto camera 120 and thus is only in the field of view of the wide-angle camera 118. As a change in camera source is required, the transition is performed as a dissolve. Similarly, in Fig. 5E, the starting frame 530transitions to an ending frame 538 containing participants 408 and 410. As the ending frame 538 is outside of the field of view of the telephoto camera 120, a dissolve transition is used to change from the telephoto camera 120 to the wide-angle camera 118.

Fig. 5F illustrates a starting frame 540 covering participant 410 and an endingframe 542, covering participants 404 and 406. As both frames extend past the field of view of the telephoto camera 120 and so are wide-angle camera 118 frames, the transition is performed as an ease. In some embodiments, the starting frame 540 is more than a threshold distance from the ending frame 542 and the transition employed may be a cut instead of an ease.

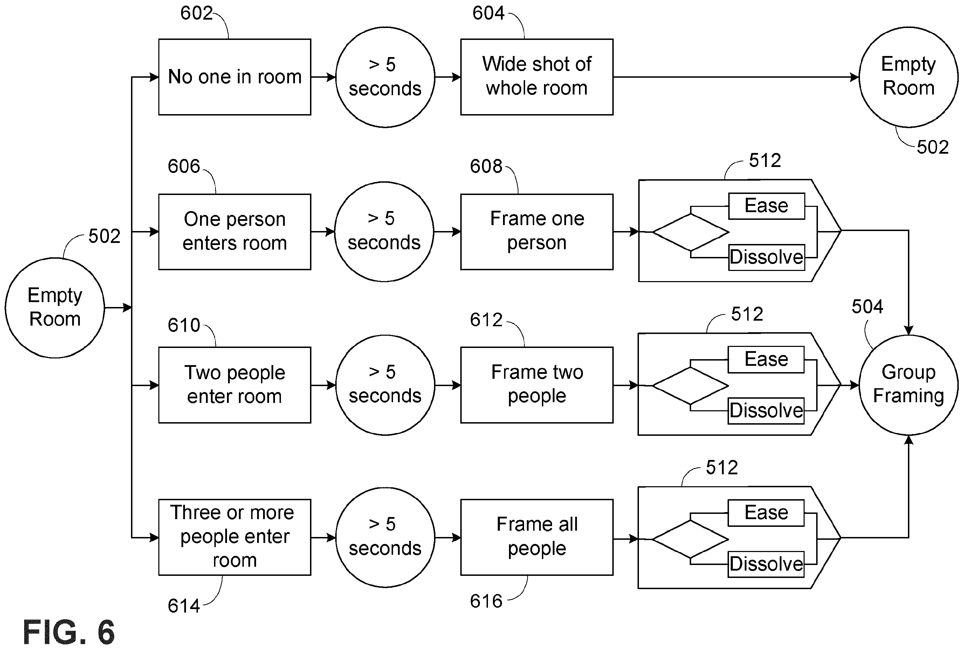

Figure 6 illustrates transitions for the empty room state 502. In condition 602 if it is determined that no one is in the room for a period that is greater than five seconds, the framing decision 604 is a wide shot of the whole room and to remain in the empty room state 502. In condition 606 if it is determined that a person enters the room and remains there for a period that is greater than five seconds, the framing decision 608 is to frame that individual person using the transition flowchart 512 and enter the group framing state 504. In condition 610 if it is determined that two people enter the room and remain there for a period that is greater than five seconds, the framing decision 612 is to frame those two people using the transition flowchart 512 and proceed to the group framing state 504. In condition 614 if it is determined that three or more people enter the room and remain there for a period that is greater than five seconds, the framing decision 616 is to frame all of the participants that have entered the room using the transition flowchart 512 and proceed to the group framing state 504.

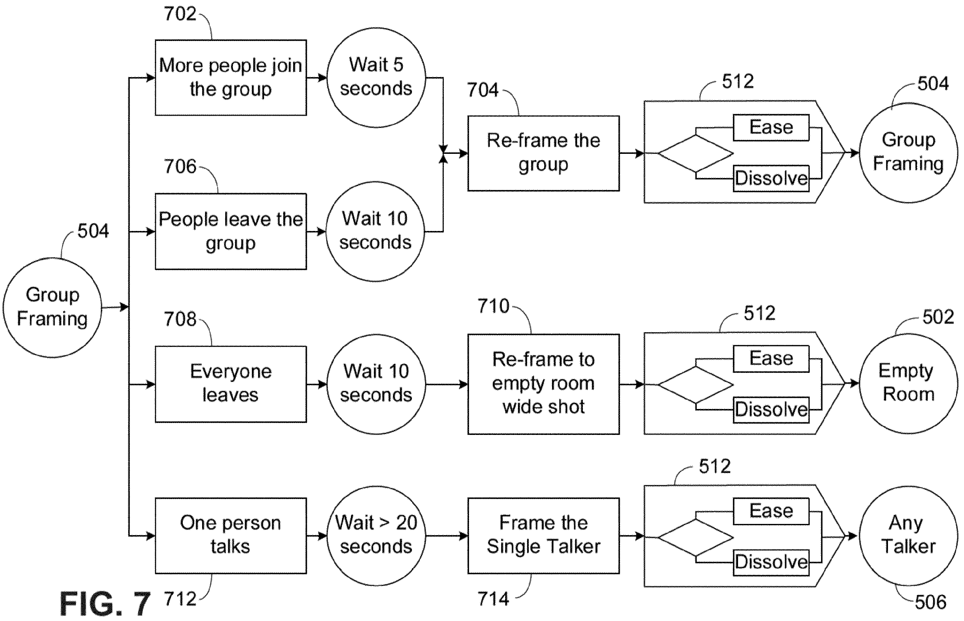

In Figure 7, when in the group framing state 504, in condition 702 if it is determined that more people join the group in the room and remain there for a period of five seconds or more, the framing decision 704 is to reframe from the prior group to the current group using the transition flowchart 512 and remain in the group framing state 504. In condition 706 if it is determined that several people leave the group for a period that is ten seconds or more, the framing decision is framing decision 704. In condition 708 if it is determined that everyone leaves the room and remains out for a period that is 10 seconds or more, then the framing decision 710 is to reframe to the empty room wide shot using the transition flowchart 512 and proceed to the empty room state 502. In condition 712 if it is determined that a person in the room talks, after a period that is 20 seconds the framing decision 714 is to frame the single talker using the transition flowchart 512 and enter the any talker state 506.

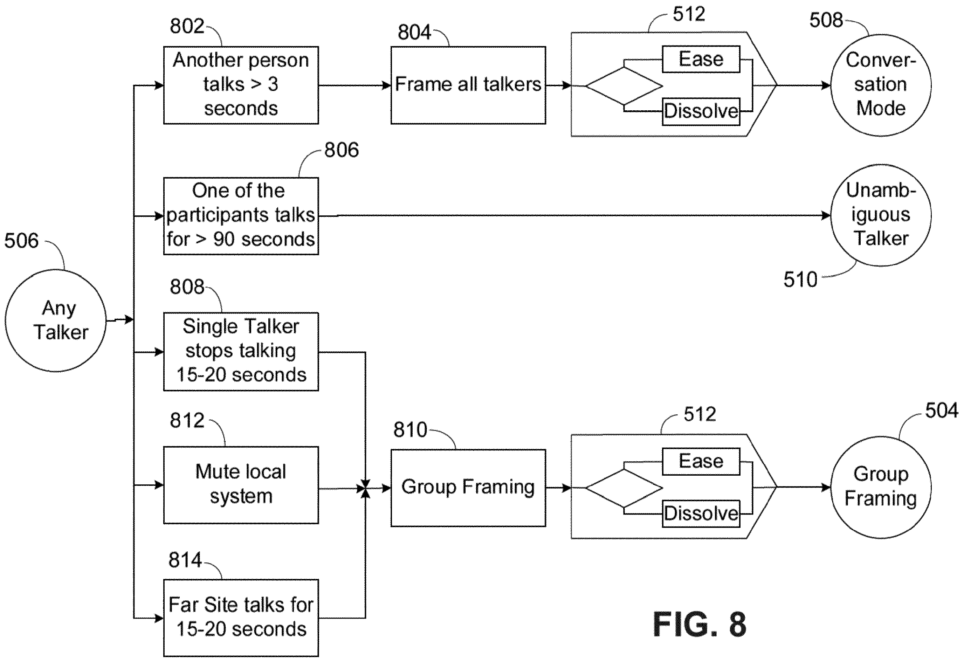

In Figure 8, in the any talker state 506, in condition 802 if it is determined that another person talks for a period that is greater than three seconds, the framing decision 804 is to frame all of the talkers using the transition flowchart 512 and to enter the conversation mode state 508. In condition 806 if it is determined that the single talker continues to talk for a period that is greater than 90 seconds, the framing remains the same but the state changes to the unambiguous talker state 510. In condition 808 if it is determined that the single talker stops talking for a period, such as 15 to 20 seconds, the framing decision 810 is to frame the group using the transition flowchart 512 and enter the group framing state 504. While in the any talker state 506, in condition 812 if it is determined that the local endpoint 100 is muted, then the framing decision is framing decision 810. In condition 814 if it is determined that the far or remote site talks for a period, such as 15 to 20 seconds, the framing decision is again framing decision 810.

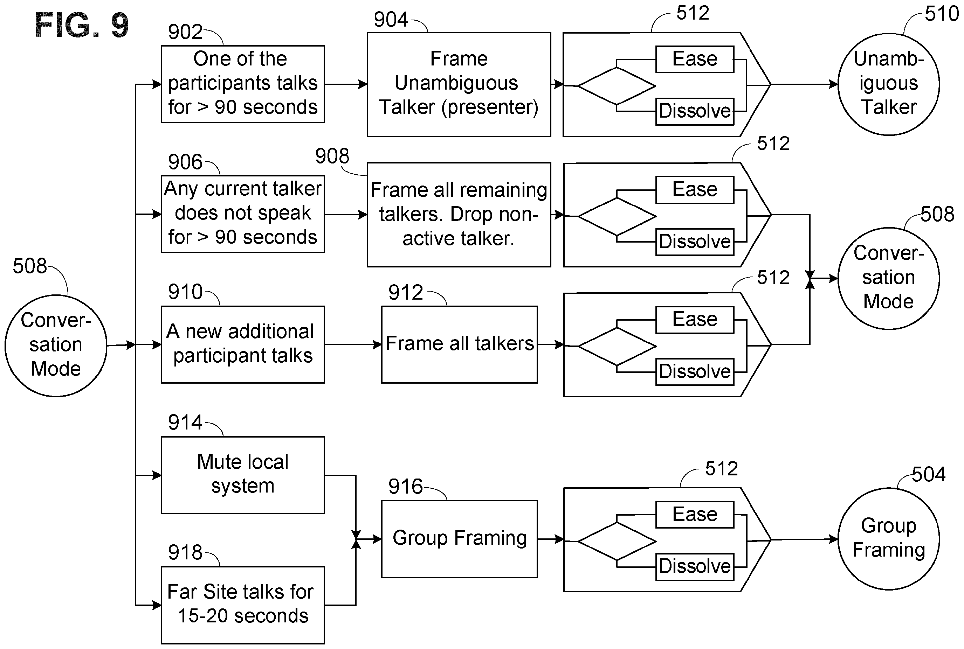

In Figure 9, in the conversation mode state 508, in condition 902 if it is determined that one of the participants talks for a period that is greater than 90 seconds, the framing decision 904 is to frame the unambiguous talker using the transition flowchart 512, as it is assumed that the talker is a presenter, and the unambiguous talker state 510 is entered. In condition 906 if it is determined that any current talker does not talk for a period that is greater than 90 seconds, then the framing decision 908 is to frame the remaining talkers using the transition flowchart 512 and drop the non-active talker. The state remains in the conversation mode state 508. In one example, this is the case even if there is only one talker remaining. In another example, an additional condition can be inserted after condition 906 to determine if there is only one talker remaining. If not, then framing decision 908 is performed. If it is determined that there is only one talker remaining, the framing decision is framing decision 714 and the state becomes the any talker state 506. In condition 910 if it is determined that a new additional participant talks, preferably for a period that is greater than three seconds, the framing decision 912 is to frame all talkers using the transition flowchart 512 and then remain in the conversation mode state 508. In condition 914 if it is determined that the local endpoint 100 is muted, the framing decision 916 is to frame the group using the transition flowchart 512 and then enter the group framing state 504. Similarly, in condition 918 if it is determined that the far site talks for a period, such as 15 to 20 seconds, the framing decision is framing decision 916.

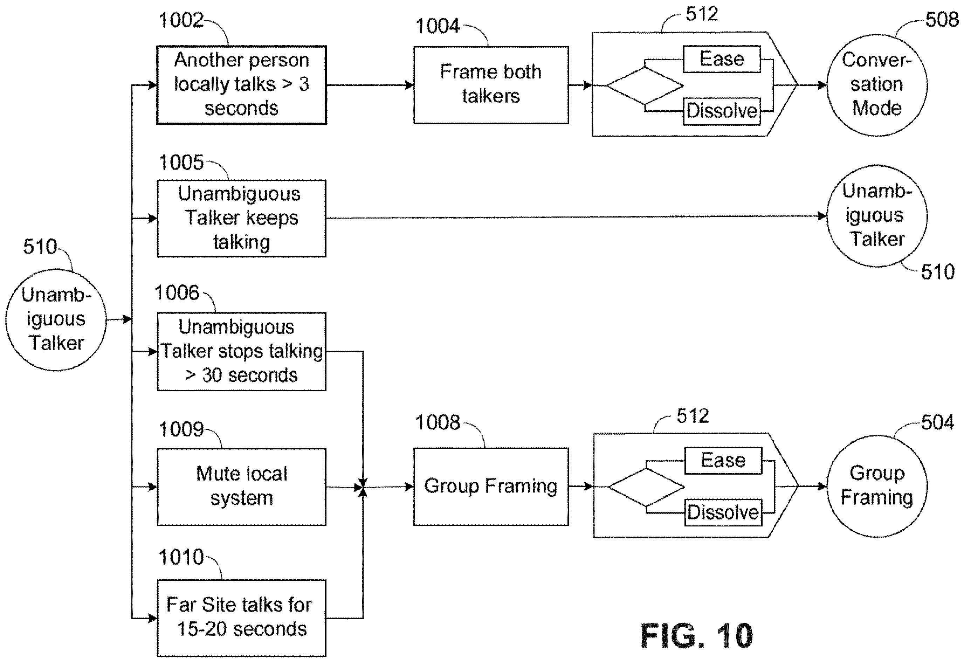

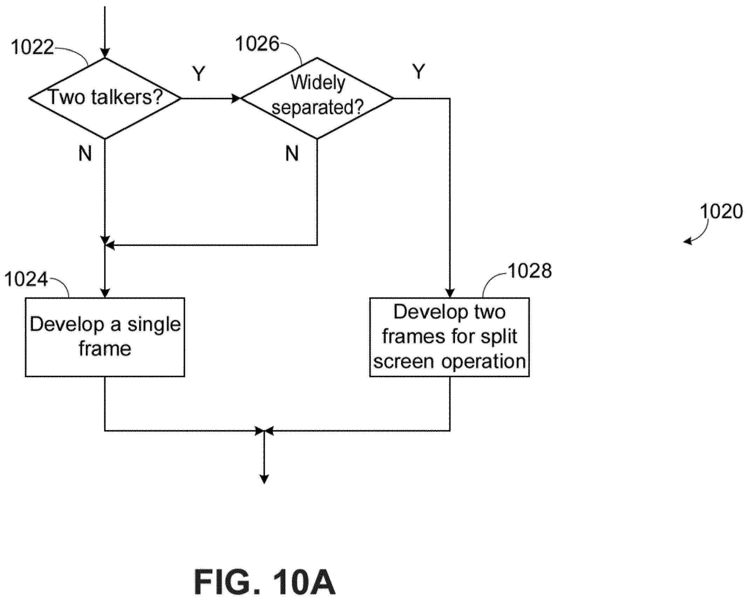

In Figure 10, in the unambiguous talker state 510, in condition 1002 if it is determined that another person at the near or local end talks for a period greater than three seconds, the framing decision 1004 is to frame both talkers using the transition flowchart 512 and enter the conversation mode state 508. In condition 1005 if it is determined that the person that is talking continues to talk, the unambiguous talker state 510 is continued. In condition 1006 if it is determined that the unambiguous talker stops talking for greater than 30 seconds, the framing decision 1008 is to frame the group using the transition flowchart 512 and enter the group framing state 504. In condition 1009 if it is determined that the local endpoint 100 is muted, or in condition 1010 if it is determined that the far site talks for a period, such as 15 to 20 seconds, the framing decision is framing decision 1008.

In some examples, in cases of two talkers that are widely separated, split screen operation, where each talker is individually framed and the two frames are combined for transmission to the far site, is used. Split screen operation 1020 is illustrated in Fig. 10A. The split screen operation 1020 is used for any framing operation described above where more than one talker is to be framed. In step 1022 it is determined if two talkers are being framed. Split screen operation is preferably for two talkers. If there are not two talkers, then in step 1024, all talkers are framed in a single frame. If there are two talkers, in step 1026, it is determined if the two talkers are widely spaced. Widely spaced is not an absolute but relates more to the amount of space between the two talkers relative to the size of the frame. In one embodiment, if the two participants are deemed to be more than a threshold or predetermined pixel distance away from each other, the participants are considered to be widely separated. In another embodiment, if the frame is predominantly space between the talkers and the talkers just appear as small images at each side of a single frame, then the talkers can be considered widely spaced. An example of widely spaced is two talkers on opposite sides of a large conference table. If the two talkers are not widely spaced, a single frame is developed in step 1024. If widely spaced, two frames, one for each talker, are developed in step 1028. The resulting single frame or split frames are provided to the transition flowchart 512.

In some embodiments, split screen may also be performed for scenarios with three or more talkers. With three or more talkers, three or more frames may be developed in step 1028 for split screen operation. Alternatively, the talkers may be grouped into one or more groups and the groups may be compared to determine if the groups are widely separated at 1026. For example, if there are three talkers and two of the three talkers are close to each other, the two talkers that are close to each other are grouped and that group is compared to the third talker to check if the two are widely separated.

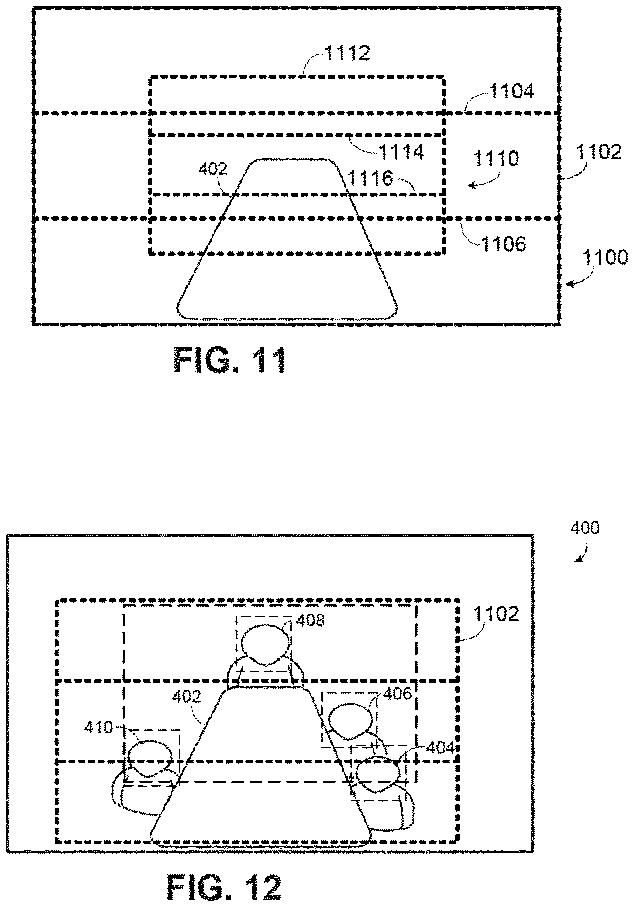

Figures 11 to 18 provide illustrations of the framing for particular states and under particular conditions. Referring to Figure 11, the scene is the empty conference room 400 containing just the conference table 402. A grid of dashed lines 1100 is comprised of an outer rectangle or frame 1102, the frame of the image to be provided to the far site, and two horizontal lines 1104 and 1106, which represent horizontal rule of thirds lines for the wide-angle camera 118. The rule of thirds is a guideline that an image should be imagined to be divided into three equal parts and that objects look best aligned with the particular lines. A grid of dashed lines 1110 is comprised of an outer rectangle or frame 1112, the frame of the image to be provided to the far site, and two horizontal lines 1114 and 1116, which represent horizontal rule of thirds lines for the telephoto camera 120. Figure 11 represents the empty room state 502, where the entire conference room 400 is framed using the wide-angle camera 118.

Referring to Figure 12, the four participants 404, 406, 408, and 410 have been placed around the conference table 402. All of the participants 404 - 410 are silent. Given that there are more than three people, condition 614 is satisfied, and the state is the group framing state 504. The frame 1102 has been reduced in size from that of Figure 11 to only contain the four participants 404-410 and not the remainder of the conference room 400. The transition from the full room to the frame of the four participants was performed as an ease as the wide-angle camera 118 is used for both frames. It is noted that there is a dashed square around the head symbol of each participant. That dashed square represents the bounding box as determined by the video-based locator 136.

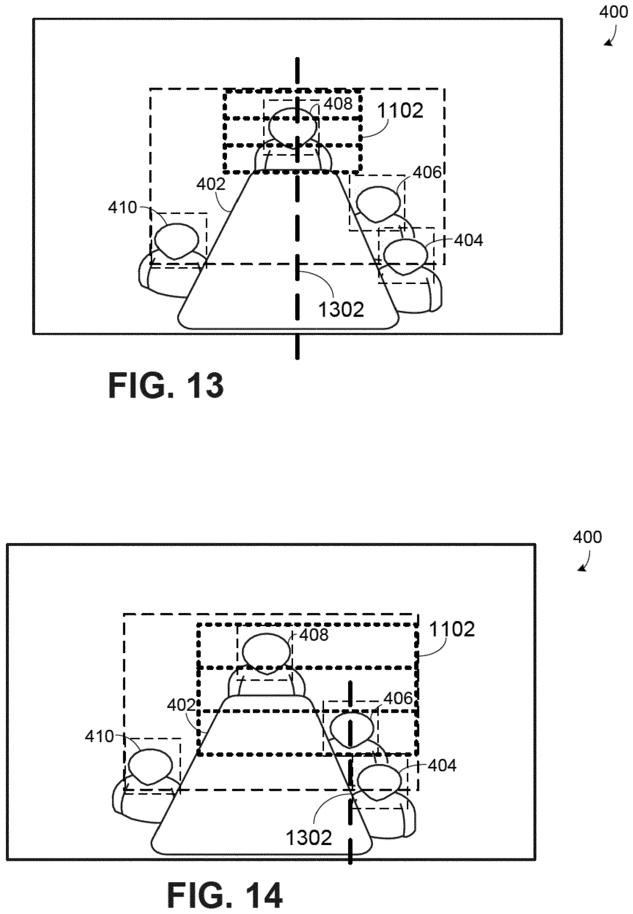

In Figure 13, participant 408 begins talking. This is indicated by a vertical dashed line 1302 which represents the audio-based locator module 134 talker determination line. This situation now meets condition 712, and thus, the frame 1102 is reduced in size to frame just participant 408 in the any talker state 506. As the ending frame is entirely within the field of view of the telephoto camera 120, the transition is a dissolve transition between the wide-angle camera 118 and the telephoto camera 120.

In Figure 14, participant 406 has started to talk as indicated by the vertical dashed line 1302. Therefore, condition 802 is met and the frame 1102 has been increased in size and shifted slightly to include both participant 408 and participant 406. As both frames are in the field of view of the telephoto camera 120, the transition is done as an ease transition. At this time, the system is in conversation mode state 508.

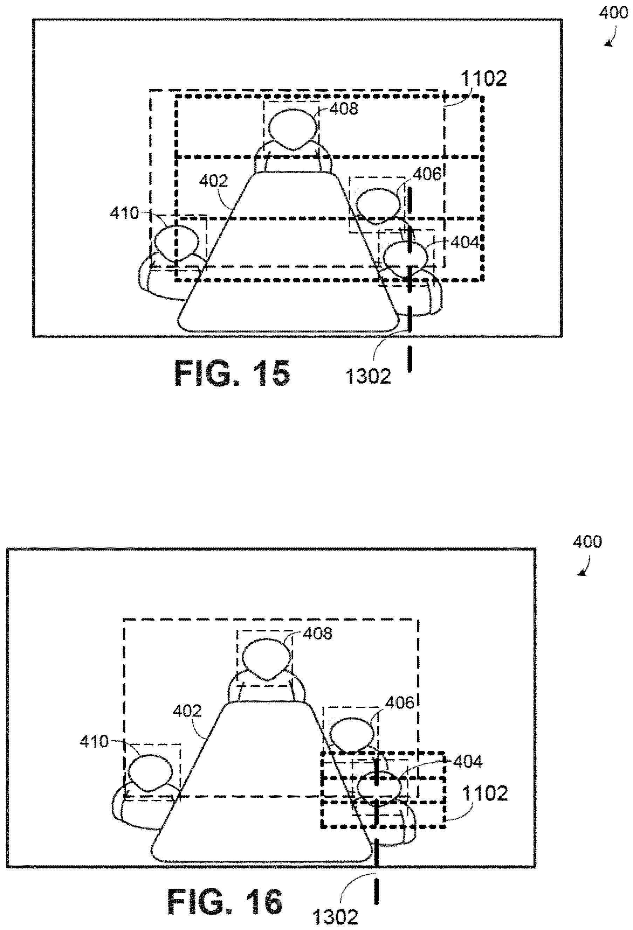

In Figure 15, a third participant 404 has started talking, meeting condition 910. Frame 1102 has been reconfigured to frame all three participants 404, 406, and 408, as they are all talkers in the conversation. As the frame now extends past the field of view of the telephoto camera 120, the wide-angle camera 118 may be used, and the transition is performed as a dissolve transition. The state remains in the conversation mode state 508.

In Figure 16, participant 404 has continued talking for a period of time greater than 90 seconds, meeting condition 902. At this time, the frame 1102 is changed to frame just participant 404, as that participant is considered to be a presenter. The transition is performed as an ease transition, as both frames are only within the field of view of the wide-angle camera 118.

If participant 406 were to commence talking for greater than three seconds, condition 1002 is met and the frame 1102 would change to include both participants 404 and 406. If participant 408 then proceeds to start talking, the frame 1102 returns to that shown in Figure 15, as condition 910 was met. If participant 406 stops talking for 90 seconds, the frame 1102 would actually remain in the same position as in Figure 15, but it would be framing participants 404 and 408. Participant 406 would still be shown because participant 406 is in between participant 404 and 408. If participant 410 then commences talking, the frame 1102 would expand in size to match the frame in Figure 12 as now participants 404, 408, and 410 would be the active talkers. If participant 410 proceeds to talk for a period greater than 90 seconds, the frame 1102 would ease to frame only participant 410, similar to that shown in Figure 16 for framing participant 404. Then, if participant 408 starts talking, the frame 1102 is configured to frame participants 410 and 408. Participants 404 and 406 would be visible at the far edge of the frame 1102, as the frame 1102 would retain proportion and thus capture them both. The far site starts talking for greater than 20 seconds and the frame 1102 returns to the group framing of Figure 12.

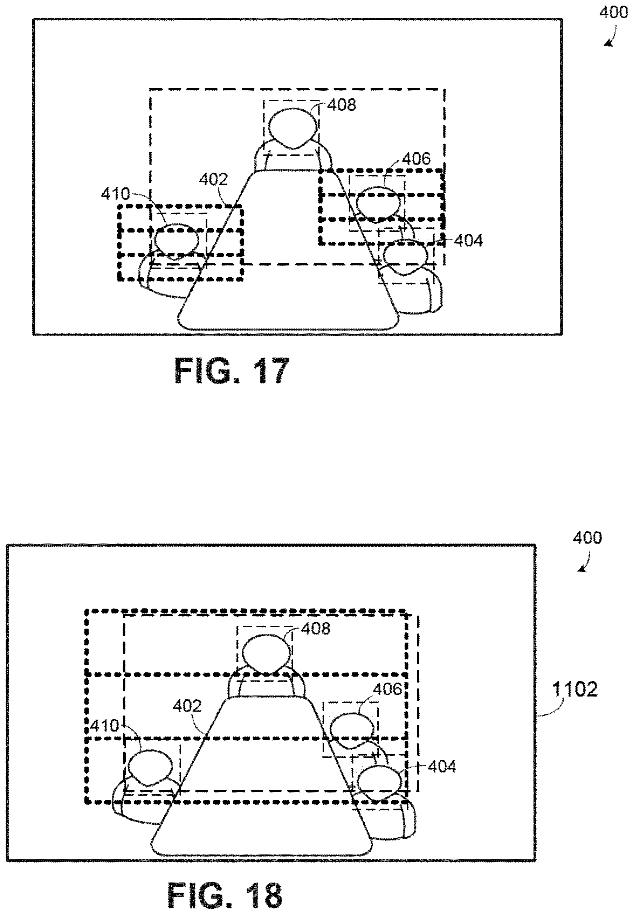

In Fig. 17, there are two talkers, participants 406 and 410. As the participants are widely separated, two individual frames are used in a split screen arrangement and an image of those two frames is provided to the far site. In the illustrated example, each frame is developed from the wide-angle camera 118, even though the frame for participant 406 is entirely in the field of view of the telephoto camera 120. This is done because mixing cameras in the split screen would result in the individual in the telephoto camera 120 frame appearing larger and closer to the camera. By using the single camera for each frame, the relationship between the participants is maintained.

In Fig. 18, participant 408 begins talking. The framing becomes the three participants. This transition occurs as a dissolve transition because of the change from split screen to single frame, even though all frames would be in the field of view of the wide-angle camera 118.

Therefore, the use of the described framing states, framing conditions, and framing transitions provides pleasant transitions between the various situations from empty rooms to nonspeaking participants, to single talkers, through multiple talkers, to a presenter mode, back to multiple talkers in a conversation mode and so on. When the cameras are a wide-angle camera and a telephoto camera which have approximately the same centers for the fields of view, transitions are performed using easing or dissolving, based on the camera of the starting frame and the camera of the ending frame. The conversation states and conditions and framing decisions provide a fully automated framing mechanism to provide pleasant framing of the individuals in the near site for any of the conditions relating to number of talkers, participants, and the like. The far site now sees the appropriate number of individuals that are talking, either in focus if there is only one or multiple, or if multiple individuals are talking. If no individuals are talking or the far site is doing the talking, then the natural position of framing the group is performed. These framing decisions are performed automatically without requiring input by any participant or administrator, to automatically provide a pleasant experience for the far site.

While the description has focused on use of a wide-angle camera and a telephoto camera, any two cameras with differing fields of view can be used and transitions would occur under the same principles.

The various examples described are provided by way of illustration and should not be construed to limit the scope of the disclosure. Various modifications and changes can be made to the principles and examples described herein without departing from the scope of the disclosure and without departing from the claims which follow.

In other examples, a system (100) comprises: a first camera (118 or 120) with a first field-of-view (FOV) (420 or 422); and a second camera (118 or 120) with a second FOV (420 or 422); a memory (210) storing computer-executable instructions (210); and a hardware processor (206) coupled to the first camera (118 or 120) and the second camera (120 or 118), the hardware processor (206) configured to execute the computer-executable instructions (210) to: acquire at least a first frame (514) using the first camera (118 or 120); determine a first state associated with the at least a first frame (515); acquire at least a second frame (516) using the first camera (120 or 118); determine a second state associated with the at least a second frame (518); determine, based on the first state and the second state, change data indicative of the first camera (118 or 120) used to acquire both frames (520 and 522); determine output data comprising an ease transition from the at least a first frame to the at least a second frame (524); and send the output data (528).

In an optional example of the above system (and associated method) wherein: the first FOV may incorporate the second FOV (400); and the second FOV may be centered on the first FOV (400).

In an optional example of the above system (and associated method) wherein: the second FOV may incorporate the first FOV (400); and the first FOV may be centered on the second FOV (400).

In an optional example of the above system (and associated method) wherein the ease transition (524) may comprise: cutting from the at least a first frame (530) to the at least a second frame (532).

In an optional example of the above system (and associated method) the hardware processor (206) may be further configured to execute the computer-executable instructions (210) to: acquire at least a third frame using the second camera (514 or 516); determine a third state associated with the at least a third frame (515 or 518); determine, based on the second state and the third state, second change data indicative of a change in camera source from the first camera to the second camera (520 and 522); determine second output data comprising a dissolve transition from the at least a second frame to the third frame (526); and send the second output data (528).

In other examples, a method comprises: acquiring one or more first images (514), wherein the one or more first images are acquired using a first camera (118 or 120) or a second camera (120 or 118); determining a first state associated with the one or more first images (515); acquiring one or more second images (516), wherein the one or more second images are acquired using the first camera (118 or 120) or the second camera (120 or 118); determining a second state associated with the one or more second images (518); determining, based on the first state and the second state, change data indicative of whether a change in camera source is involved; if the change data is indicative of a change in camera source (522), generating first output data comprising a dissolve transition between the one or more first images and the one or more second images (526); if the change data is not indicative of a change in camera source (522), generating second output data comprising an ease transition between the one or more first images and the one or more second images (526); and sending the first output data or the second output data (528).

In an optional example of the above method the dissolve transition (526) may comprise: transitioning from a first frame (530) to a blank frame at a first time; and transitioning from the blank frame to a second frame (536 or 538) at a second time.

In an optional example of the above method, the first state may comprise one or more of: no persons in a room (502), one or more persons in the room (606, 610, 614), one or more persons joining a group (702), one or more persons leaving the group (706), all persons leaving the group (708), one or more persons talking (712), one or more additional persons talking (802, 806), or one or more persons no longer talking (808, 812); and the second state may comprise one or more of: no persons in a room (602), one or more persons in the room (606, 610, 614), one or more persons joining a group (702), one or more persons leaving the group (706), all persons leaving the group (708), one or more persons talking (712), one or more additional persons talking (802, 806), or one or more persons no longer talking (808, 812).

## Claims

1. A system (100) comprising:
a first camera (118, 120) with a first field-of-view, FOV, (420, 422);
a second camera (120, 118) with a second FOV (420, 422);
a memory (210) storing computer-executable instructions (210); and
a hardware processor (206) coupled to (200) the first camera (118, 120) and the second camera (120, 118), and the hardware processor (206) configured to execute the computer-executable instructions (210) to:
acquire at least a first frame (514) using the first camera (118, 120);
determine a first state associated with the at least a first frame (515);
acquire at least a second frame (516) using the second camera (120, 118);
determine a second state associated with the at least a second frame (518);
determine, based on the first state and the second state, change data indicative of a change in camera source from the first camera to the second camera (520);
determine output data (526) comprising a dissolve transition (526) from the at least a first frame (514) to the at least a second frame (516); and
send the output data (528).

2. The system (100) of claim 1, wherein:
the first FOV (420, 422) incorporates the second FOV (420, 422).

3. The system (100) of claim 1, wherein:
the second FOV (420, 422) incorporates the first FOV (420, 422).

4. The system (100) of claim 1, wherein the dissolve transition (526) comprises:
overlap the at least a first frame (530) and the at least a second frame (536, 538) for a duration of time; and
after the duration of time has elapsed, transition to the at least a second frame (536, 538).

5. The system (100) of claim 1, wherein the dissolve transition comprises:
transition from the first frame (530) to a blank frame at a first time; and
transition from the blank frame to the second frame (536, 538) at a second time.

6. The system (100) of claim 1, wherein:
the first state comprises one or more of:
no persons in a room (502),
one or more persons in the room (606, 610, 614),
one or more persons joining a group (702),
one or more persons leaving the group (706),
all persons leaving the group (708),
one or more persons talking (712),
one or more additional persons talking (802, 806), or
one or more persons no longer talking (808, 812); and
the second state comprises one or more of:
no persons in a room (602),
one or more persons in the room (606, 610, 614),
one or more persons joining a group (702),
one or more persons leaving the group (706),
all persons leaving the group (708),
one or more persons talking (712),
one or more additional persons talking (802, 806), or
one or more persons no longer talking (808, 812).

7. The system (100) of claim 1, wherein:
the first state is indicative of a group of persons in a room (504); and
the second state is indicative of one or more of the persons in the group talking (506).

8. The system (100) of claim 7, the hardware processor further configured to execute the computer-executable instructions to:
acquire at least a third frame using the second camera (514 or 516);
determine a third state associated with the at least a third frame (515 or 518);
determine the third state is indicative of two persons talking (1022);
determine the two persons talking are more than a threshold pixel distance away from each other (1026);
determine second output data comprising a split screen transition that adds the third frame next to the second frame (1028); and
send the second output data (1028).

9. The system (100) of claim 1, wherein:
the first state is indicative of one or more persons talking (506); and
the second state is indicative of the one or more persons talking and one or more additional persons talking (508).

10. The system (100) of claim 1, wherein:
the first state is indicative of two or more persons talking (508); and
the second state is indicative of one person talking (510).

11. The system (100) of claim 1, wherein:
the first state is indicative of at least one person talking (506); and
the second state is indicative of no persons talking (504).

12. The system (100) of claim 1, further comprising:
a third camera with a third FOV (420, 422); and
the hardware processor further configured to execute the computer-executable instructions to:
acquire at least a third frame using the third camera (514, 516);
determine a third state associated with the at least a third frame (515, 518);
determine, based on the second state and the third state, second change data (520) indicative of a change in camera source from the second camera to the third camera;
determine second output data comprising a second dissolve transition from the at least a second frame to the third frame (526); and
send the second output data (528).

13. A method comprising:
acquiring one or more first images (514), wherein the one or more first images are acquired using a first camera (118 or 120) or a second camera (120 or 118);
determining a first state associated with the one or more first images (515);
acquiring one or more second images (516), wherein the one or more second images are acquired using the first camera (118 or 120) or the second camera (120 or 118);
determining a second state associated with the one or more second images (518);
determining, based on the first state and the second state, change data indicative of whether a change in camera source is involved;
if the change data is indicative of a change in camera source (522), generating first output data comprising a dissolve transition between the one or more first images and the one or more second images (526);
if the change data is not indicative of a change in camera source (522), generating second output data comprising an ease transition between the one or more first images and the one or more second images (526); and
sending the first output data or the second output data (528).

14. The method of claim 13, wherein the dissolve transition (526) comprises:
overlapping the at least a first frame (530) and the at least a second frame (536, 538) for a duration of time; and
after the duration of time has elapsed, transitioning to the at least a second frame (536, 538).

15. The method of claim 13, wherein the dissolve transition (526) comprises:
transitioning from a first frame (530) to a blank frame at a first time; and
transitioning from the blank frame to a second frame (536 or 538) at a second time.
